# EUROPÄISCHE PATENTSCHRIFT

(11) **EP 3 941 678 B1**
(45) Veröffentlichungstag und Bekanntmachung des Hinweises auf die Patenterteilung: **14.02.2024**
(21) Anmeldenummer: 20709122.4
(22) Anmeldetag: 12.03.2020
(51) Int. Cl.: B23K 26/16, B23K 26/38, B05B 13/06

(54) **VORRICHTUNG ZUM EINBRINGEN EINES TRENNMITTELS IN EIN HOHLFÖRMIGES WERKSTÜCK**
DEVICE FOR INTRODUCING A RELEASE AGENT INTO A HOLLOW WORKPIECE
DISPOSITIF POUR INTRODUIRE UN AGENT DE SÉPARATION DANS UNE PIÈCE OUVRÉE CREUSE

(30) Priorität: 18.03.2019 DE 102019106847
(43) Veröffentlichungstag der Anmeldung: 26.01.2022
(73) Patentinhaber: TRUMPF Werkzeugmaschinen SE + Co. KG, 71254 Ditzingen (DE)
(72) Erfinder: JARSCH, Florian, 71254 Ditzingen (DE); RUETZ, Karsten, 71640 Ludwigsburg (DE)
(74) Vertreter: Trumpf Patentabteilung
(86) Internationale Anmeldenummer: PCT/EP2020/056677
(87) Internationale Veröffentlichungsnummer: WO 2020/187693

(56) Entgegenhaltungen:
- DE-A1-102011 015 493
- DE-U- 7 531 621
- US-A- 1 850 481
- US-A- 2 520 397

## Beschreibung

Die Erfindung betrifft eine Vorrichtung zum Einbringen eines Trennmittels in ein hohlförmiges Werkstück bevor oder während das Werkstück mittels einer Laserbearbeitungsmaschine bearbeitet wird. Die Erfindung betrifft ferner eine dazugehörige Beladestation, ein dazugehöriges System, sowie ein dazugehöriges Verfahren.

Beim Laserbearbeiten, insbesondere beim Laserschneiden von hohlförmigen Werkstücken, wie beispielsweise von Rohren, setzen sich auf der Werkstückinnenseite, insbesondere der Rohrinnenseite, im Bearbeitungsprozess anfallende Schneidspitzer ab. Diese Verunreinigungen auf der Werkstückinnenseite lassen sich durch Nachreinigung nur vergleichsweise schwer, aufwendig und teuer entfernen.

Durch den Einsatz von Trennmitteln kann das Anhaften von Schneidspritzern reduziert und eine einfachere, schnellere und kostengünstigere Nachreinigung der Werkstücke ermöglicht werden. Die übliche Einbringung des Trennmittels "von Hand" ist allerdings zeitaufwendig, ferner kann die Laserbearbeitungsmaschine erheblich verschmutzt werden. Dabei wird das Trennmittel regelmäßig von Hand mit einem Sprühgerät in das bereits auf der Laserbearbeitungsmaschine gespannte Werkstück eingebracht. Um dabei sicherzugehen, dass genügend Trennmittel aufgebracht wird, wird im Regelfall eine viel zu große Menge an Trennmittel eingebracht. Überschüssiges Trennmittel kann dabei zum Teil aus dem Werkstück heraus in die Laserbearbeitungsmaschine laufen oder wird über eine Absaugvorrichtung abgesaugt. Teile der Laserbearbeitungsmaschine, wie beispielsweise die Absaugvorrichtung, Schrottentsorgungseinrichtung und Vorschubstation können dabei durch das Trennmittel verschmutzt werden. Die Verschmutzungen können zu nicht unerheblichen Folgeschäden führen. Ferner muss zur Bearbeitung eines Werkstücks regelmäßig mehrfach das Trennmittel während des Bearbeitungsprozesses eingebracht werden. Zur Einbringung des Trennmittels muss die Laserbearbeitungsmaschine angehalten werden und die Schutzkabine geöffnet werden. Hierdurch ergibt sich ein Produktivitätsverlust und eine weitergehende Verschmutzungs- und Beschädigungsgefahr der Laserbearbeitungsmaschine.

Zwar wurde in der WO 2009/059776 A1 ein erster Vorschlag zur Einbringung von Trennmittel in ein Werkstück gemacht. Allerdings ist dieser Vorschlag nicht wirtschaftlich einsetzbar und eine Positionierung der Düse der darin offenbarten Vorrichtung zum Ausbringen des Trennmittels in einem Werkstück ist technisch aufwendig und schwierig. Insofern wird aktuell auch weiterhin händisch Trennmittel in Werkstücke vor der Laserbearbeitung eingebracht.

Aus der DE 10 2011 015493 A1, der DE 75 31 621 U und der US 2 850 481 A sind jeweils längliche Sprühvorrichtungen bekannt, die dazu geeignet sind, in ein Rohr einzutauchen und die Innenfläche des Rohres mit einem Beschichtungsmittel zu benetzen. Aus den Schriften ist ferner bekannt, die Sprühvorrichtungen mit lateralen Abstützungen zu versehen, welche als Zentrierhilfe für Sprühvorrichtung in dem zu benetzenden Rohr dienen.

Der Erfindung liegt insgesamt die Aufgabe zugrunde, den bekannten Nachteilen des Standes der Technik Abhilfe zu schaffen.

Diese Aufgabe wird zunächst durch eine Beladestation mit den Merkmalen des Anspruchs 1 gelöst.

Vorgeschlagen wird demnach eine Beladestation zur Lagerung hohlförmiger Werkstücke und zum Beladen einer Laserbearbeitungsmaschine mit den Werkstücken. Dabei umfasst die Beladestation eine Vorrichtung zum Einbringen eines Trennmittels in die hohlförmigen Werkstücke bevor diese mittels der Laserbearbeitungsmaschine bearbeitet werden. Folglich kann das Einbringen des Trennmittels an der Beladestation erfolgen, bevor das Werkstück mittels der Laserbearbeitungsmaschine bearbeitet wird, so dass die Produktivität der Laserbearbeitungsmaschine nicht beeinträchtigt wird. Die Vorrichtung zum Einbringen des Trennmittels umfasst einen Einführabschnitt mit einer Düse zum Ausbringen des Trennmittels und mit einem am Einführabschnitt angeordneten Zentrierelement zum Zentrieren des Einführabschnitts innerhalb des hohlförmigen Werkstücks.

Das Zentrierelement der Vorrichtung dient insbesondere dazu, den Einführabschnitt in einem mittleren Bereich des hohlförmigen Werkstücks definiert zu halten. Dadurch kann eine gleichmäßige Benetzung der Werkstückinnenseite gewährleistet werden. Gezielt und insbesondere mit der minimal benötigten Menge an Trennmittel kann das Trennmittel in das Werkstück eingebracht werden. Verschmutzungen der Laserbearbeitungsmaschine können so im Wesentlichen oder sogar vollständig vermieden werden. Dabei kann das Trennmittel insbesondere vor der Laserbearbeitung in das Werkstück eingebracht werden. Der Einbringungsprozess kann demnach insbesondere außerhalb der Hauptzeit der Laserbearbeitungsmaschine stattfinden, so dass die Produktivität der Laserbearbeitungsmaschine insgesamt nicht oder nur unwesentlich beeinflusst wird. Das Zentrierelement kann insbesondere derart ausgebildet sein, dass nicht nur beispielsweise Rundrohre, sondern auch andersförmige hohlförmige Werkstücke, wie beispielsweise Rechteckrohre, mit Trennmittel benetzt werden können, wobei das Zentrierelement den Einführabschnitt und insbesondere die Düse des Einführabschnitts zentriert im jeweiligen Werkstück hält. Die Düse kann dabei insbesondere als Ringstrahldüse ausgebildet sein, so dass Trennmittel mit Hilfe von Druckluft gleichmäßig und fein zerstäubt auf die Werkstückinnenseite aufsprühbar ist. Dabei kann über die Düse insbesondere der Zerstäubungsgrad und/oder der Volumenstrom je nach Werkstückgeometrie und sonstigen Anforderungen angepasst werden.

Eine vorteilhafte Weiterbildung der Erfindung sieht vor, dass das Zentrierelement eine Anzahl Zentrierbürstenfasern umfasst. Durch den Einsatz derartiger Zentrierbürstenfasern kann insbesondere ein zentriertes Halten des Einführabschnitts bzw. insbesondere der Düse des Einführabschnitts bei unterschiedlichsten Werkstückinnenseitengeometrien bereitgestellt werden. So kann beispielsweise bei Rund- und Rechteckrohren unterschiedlicher Durchmesser eine Zentrierung bereitgestellt werden. Dadurch, dass die Zentrierbürstenfasern insbesondere elastisch verformbar ausgebildet sein können, können sie sich an verschiedene Werkstückgeometrien, insbesondere an verschiedene Werkstückinnenseitendurchmesser anpassen. Dabei können die Zentrierbürstenfasern an einem Bürstenkörper angeordnet sein. Der Bürstenkörper kann wiederum am Einführabschnitt in Einführrichtung vor der Düse angeordnet sein. Dabei können die Zentrierbürstenfasern über den Außenumfang des Einführabschnitts angeordnet sein. Denkbar wäre beispielsweise eine Anordnung von drei Zentrierbürstenfaserbündeln in einem Abstand von 120° zueinander. Denkbar wäre allerdings auch beispielsweise das Vorsehen von vier Zentrierfaserbündeln, die in einem 90°-Abstand zueinander angeordnet sind. Eine Anordnung von drei Zentrierfaserbündeln hat sich insbesondere bei kreiszylindrischen Werkstückinnenseitengeometrien als vorteilhaft herausgestellt, während das Vorsehen von vier Zentrierfaserbündeln sich insbesondere bei quadratischen oder rechteckigen Werkstückinnenseitengeometrien als vorteilhaft herausgestellt hat.

Das Zentrierelement kann statt Zentrierfaserbürsten auch andere Ausgestaltungen, Geometrien und/oder Materialien umfassen, solange eine zentrierende Wirkung ähnlich von Zentrierfaserbürsten bereitstellbar ist.

Erfindungsgemäß umfasst der Einführabschnitt einen Führungsstab, an dessen freiem Ende die Düse angeordnet ist, wobei das Zentrierelement am Führungsstab angeordnet ist. Der Führungsstab sorgt dabei insbesondere für ein prozesssicheres Einführen des Einführabschnitts in ein Werkstück. Dabei ist insbesondere denkbar, dass das Zentrierelement an der Außenseite des Führungsstabs angeordnet ist. Durch den Einführabschnitt hindurch kann insbesondere Druckluft und Trennmittel zur Düse gebracht werden, wo das Trennmittel mittels der Druckluft freisetzbar ist. Denkbar ist, dass zusätzlich noch Steuerluft zur Steuerung der Düse durch den Einführabschnitt hindurchgeführt wird. Insbesondere können folglich zwei bis drei Fluidleitungen zur Düse durch den Einführabschnitt hindurch geführt werden.

Vorteilhaft ist auch, wenn am Führungsstab zusätzlich zum Zentrierelement ein Stabilisationselement vorgesehen ist, um ein Verkippen des Führungsstabes im Werkstück zu verhindern. Das Stabilisationselement kann dabei in Einführrichtung beabstandet zum Zentrierelement vor dem Zentrierelement angeordnet sein. Dadurch kann ein Verkippen des Führungsstabs im Werkstück verhindert werden und so seine besonders genaue Positionierung der Düse bereitgestellt werden. Das Stabilisationselement kann dabei vom Aufbau her dem Aufbau des Zentrierelements entsprechen und somit insbesondere Bürstenfasern bzw. Bürstenfaserbündel aufweisen.

Besonders bevorzugt ist, wenn zusätzlich ein Einführschlauch mit einer Düse zum Ausbringen des Trennmittels vorgesehen ist, wobei der Einführschlauch statt des Einführabschnitts in ein hohlförmiges Werkstück einführbar ist. Damit wird eine besonders flexibel einsetzbare Vorrichtung bereitgestellt. Insbesondere bei kleinen Durchmessern der Werkstückinnenseite kann somit in besonders einfacher Weise anstatt des Einführabschnitts auch ein abrollbarer Schlauch in das Werkstück eingeschoben werden. So kann beispielsweise bei Rohrdurchmessern von 20 mm bis 70 mm der Einführschlauch statt des Einführabschnitts in das Werkstück eingeführt werden. Bei derart geringen Durchmessern hat es sich herausgestellt, dass ein Schlauch auch ohne das Vorsehen eines Zentrierelements eingeführt werden kann und dennoch eine hinreichend präzise und sparsame Trennmitteleinbringung möglich ist. Insofern wird eine besonders flexibel einsetzbare Vorrichtung bereitgestellt, bei der je nach Durchmesser des Werkstücks entweder der Einführabschnitt mit Zentrierelement oder der Einführschlauch eingeführt werden kann.

Erfindungsgemäß schließt an das der Düse abgewandte Ende des Führungsstabs eine Energieführungskette an. Die Energieführungskette kann die Medienzufuhr an die Düse stabilisieren und führen. Dabei ist denkbar, dass sich die Energieführungskette insbesondere bei vergleichsweise langen Rohren innerhalb des Werkstücks verbiegt, bis die Energieführungskette zur Anlage an der Werkstückinnenseite kommt. Dadurch, dass allerdings am Einführabschnitt ein Zentrierelement vorgesehen ist, kann die Düse dennoch im Werkstück zentriert werden und so die Werkstückinnenseite, insbesondere gleichmäßig mit Trennmittel benetzen.

Ferner ist eine Kettentrommel zum Aufrollen der Energieführungskette vorgesehen. Dabei kann die Kettentrommel insbesondere zum passiven Aufrollen (beispielsweise über ein Federelement) der Energieführungskette ausgebildet sein. Ferner ist ebenfalls eine Einführeinrichtung mit einem Antriebsmittel zum Einführen des Einführabschnitts in das Werkstück vorgesehen. Die Einführeinrichtung kann dabei insbesondere in Einführrichtung vor dem Werkstück platziert sein. Dabei kann das Antriebsmittel insbesondere als (elektrischer) Motor ausgebildet sein und eine Antriebsrolle antreiben, um den Einführabschnitt in das Werkstück einzuführen. Um dabei ein sicheres Antreiben bereitzustellen, kann oberhalb der Antriebsrolle wenigstens eine Spannrolle vorgesehen sein. In Einführrichtung vor der Spannrolle bzw. Antriebsrolle kann wenigstens eine Führungsrolle zur definierten Hinführung des Einführabschnitts in das Werkstück hinein vorgesehen sein.

Erfindungsgemäß weist die Beladestation ein Maschinengestell und einen axial verlagerbaren Messschieber auf, wobei die Kettentrommel an dem Maschinengestell ortsfest angeordnet ist, und wobei die Einführeinrichtung am Messschieber angeordnet ist. Dabei kann das Maschinengestell eine Bündelmulde aufweisen, in der Werkstücke vor der Laserbearbeitung gelagert werden können. Ein vereinzeltes Werkstück kann daraufhin vom Messschieber an eine definierte Position verlagert werden und die Länge des Werkstücks bestimmt werden. Der Messschieber hat folglich die Funktion, ein vereinzeltes Werkstück in eine definierte Position, insbesondere an einen Anschlag hin, zu verschieben und die Länge des Werkstücks zu messen. An dem Messschieber kann die Einführeinrichtung angeordnet sein, während die Kettentrommel ortsfest am Maschinengestell angeordnet sein kann. Wenn der Messschieber verlagert wird, wird folglich die Energieführungskette von der Kettentrommel abgewickelt und der an der Einführeinrichtung befestigte Einführabschnitt wird zum Werkstück hin verlagert. Daraufhin kann mittels der Einführeinrichtung der Einführabschnitt mit der Düse in das Werkstück eingeführt werden.

Gemäß einer alternativen Variante nach Anspruch 2 weist die Beladestation einen axial verlagerbaren Messschieber auf, wobei die Kettentrommel und die Einführeinrichtung am Messschieber angeordnet sind. In diesem Fall sind folglich die Kettentrommel und die Einführeinrichtung am Messschieber verlagerbar angeordnet.

Gemäß einer weiteren alternativen Variante nach Anspruch 3 weist die Beladestation ein Maschinengestell auf, wobei die Kettentrommel am Maschinengestell axial verlagerbar angeordnet ist, und wobei die Einführeinrichtung an einem mit der Kettentrommel bewegungsgekoppelten Ausleger angeordnet ist. Folglich sind in diesem Fall die Kettentrommel und die Einführeinrichtung nicht an Messschieber angeordnet. Vielmehr ist die Kettentrommel am Maschinengestell axial angeordnet. An dem, insbesondere vertikal verlagerbaren, Ausleger kann die Einführeinrichtung vorgesehen sein, um den Einführabschnitt in ein Werkstück einführen.

Weiterhin wird die eingangs gestellte Aufgabe auch gelöst durch ein System nach Anspruch 7 zum Bearbeiten hohlförmiger Werkstücke, das System umfassend eine erfindungsgemäße Beladestation und eine Laserbearbeitungsmaschine zum Laserbearbeiten der Werkstücke. Folglich kann ein System bereitgestellt werden, bei dem das Benetzen mit Trennmittel vor der Laserbearbeitung durchgeführt wird, so dass die Produktivität der Laserbearbeitungsmaschine nicht oder nur unwesentlich leidet.

Schließlich wird die eingangs gestellte Aufgabe auch gelöst durch ein Verfahren nach Anspruch 8 zum Einbringen eines Trennmittels in ein hohlförmiges Werkstück bevor das Werkstück mittels einer Laserbearbeitungsmaschine bearbeitet wird. Das Verfahren wird mittels einer erfindungsgemäßen Beladestation durchgeführt und umfasst die folgenden Schritte:
a. Einführen des Einführabschnitts zum Ausbringen des Trennmittels in ein hohlförmiges Werkstück, wobei das Zentrierelement den Einführabschnitt innerhalb des Werkstücks zentriert; und
b. Ausbringen des Trennmittels im Werkstück durch die Düse hindurch.

Trennmittel kann folglich definiert einbracht werden. Dabei kann insbesondere sichergestellt werden, dass lediglich die benötigte Menge an Trennmittel in das Werkstück eingebracht wird, so dass Verschmutzungen, insbesondere Verschmutzungen der Laserbearbeitungsmaschine, weitestgehend vermieden werden können.

Vorteilhafterweise wird das Verfahren unter Verwendung des erfindungsgemäßen Systems durchgeführt, wobei das Verfahren den weiteren Schritt umfasst:
c. Laserbearbeiten des mit Trennmittel benetzten Werkstücks mittels der Laserbearbeitungsmaschine.

Das mit Trennmittel benetzte Werkstück kann folglich laserbearbeitet werden. Während der Laserbearbeitung selbst wird folglich insbesondere keine Unterbrechung zur weiteren Trennmitteleinbringung benötigt, so dass eine besonders effiziente Laserbearbeitung bereitgestellt werden kann.

Weitere Einzelheiten und vorteilhafte Ausgestaltungen der Erfindung sind der folgenden Beschreibung zu entnehmen, anhand derer die in den Figuren dargestellten Ausführungsformen der Erfindung näher beschrieben und erläutert ist.

Es zeigen:
- Figur 1: eine stark schematisiert dargestellte skizzenartige Darstellung eines Systems zum Bearbeiten hohlförmiger Werkstücke;
- Figur 2: schematischer Querschnitt durch ein hohlförmiges Werkstück mit einem darin eingeführten Einführabschnitt einer Vorrichtung zum Einbringen von Trennmittel in das Werkstück;
- Figur 3: a) schematische Draufsicht auf ein rohrförmiges Werkstück mit darin eingeführtem Einführabschnitt;
b) schematische Draufsicht auf ein quadratisches Werkstück mit darin eingeführtem Einführabschnitt;
c) schematische Draufsicht auf ein rechteckiges Werkstück mit darin eingeführtem Einführabschnitt;
- Figur 4: a) schematische Darstellung einer Beladestation umfassend eine Vorrichtung zum Einbringen von Trennmittel gemäß einer ersten Ausführungsform;
b) schematische Querschnittsdarstellung der in Figur 4a) gezeigten Ausführungsform;
c) schematische Darstellung einer Einführeinrichtung der Vorrichtung der Beladestation gemäß Figur 4a);
- Figur 5: a) schematische Darstellung einer Beladestation mit einer Vorrichtung zum Einbringen von Trennmittel gemäß einer zweiten Ausführungsform;
b) schematische Querschnittsdarstellung der Beladestation gemäß Figur 5a); und
- Figur 6: a) schematische Darstellung einer Beladestation mit einer Vorrichtung zum Einbringen von Trennmittel gemäß einer dritten Ausführungsform;
b) schematische Querschnittsdarstellung der Beladestation gemäß Figur 6a).

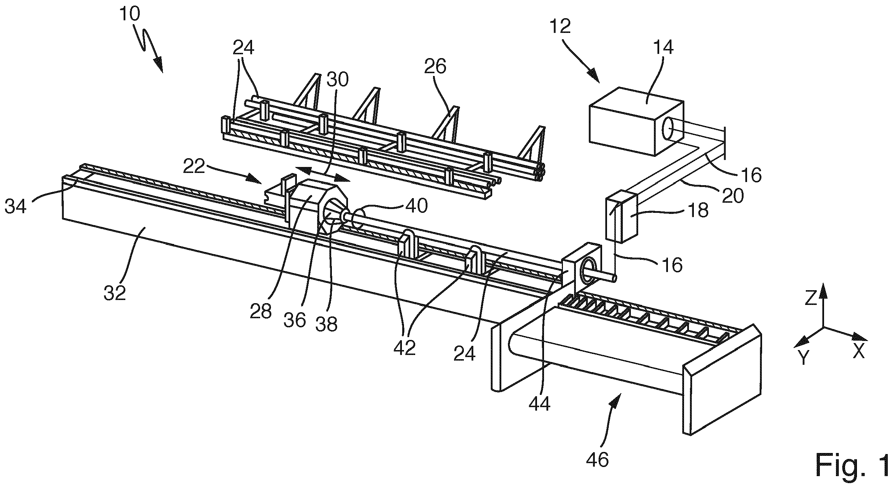

Figur 1 zeigt schematisch vereinfacht ein insgesamt mit dem Bezugszeichen 10 bezeichnetes System zum Bearbeiten hohlförmiger Werkstücke.

Das System 10 umfasst zunächst eine Laserbearbeitungsmaschine 12. Die Laserbearbeitungsmaschine 12 umfasst eine Laserstrahlquelle 14 zum Erzeugen eines Laserstrahls 16, einen Laserschneidkopf 18, sowie eine Strahlführung 20, die den Laserstrahl 16 von der Laserstrahlquelle 14 zum Laserschneidkopf 18 führt.

Das System 10 umfasst ferner eine Zuführeinrichtung 22 zur seitlichen Zufuhr eines von der Laserbearbeitungsmaschine 12 mittels des erzeugten Laserstrahls 16 zu bearbeitenden, insbesondere zu schneidenden, Werkstücks 24. Die Zuführeinrichtung 22 umfasst eine Halteeinrichtung 28 zur Halterung und Verlagerung eines Werkstücks 24, sodass dieses lasergeschnitten werden kann. Die Halteeinrichtung 28 ist motorisch angetrieben und in eine Vorschubrichtung (X-Richtung) 30 vor und zurück verlagerbar. Die Zuführeinrichtung 22 umfasst weiterhin ein Maschinenbett 32 mit Führungsschienen 34, an denen die Halteeinrichtung 28 verlagerbar angeordnet ist. Die Halteeinrichtung 28 weist ferner ein Spannfutter 36 mit Spannbacken 38 auf. Das Spannfutter 36 dient zur Halterung des Werkstücks 24. Das Spannfutter 36 ist dabei, wie durch den Doppelpfeil 40 angedeutet, drehbar, um ein eingespanntes Werkstück 24 zu drehen. Die Zuführeinrichtung 22 umfasst ferner eine am Maschinenbett 32 angeordnete Werkstückabstützung 42 zur Stützung des Werkstücks 24. Schließlich umfasst die Zuführeinrichtung 22 ein Durchschiebefutter 44, durch welche das Werkstück 24 der Laserbearbeitungsmaschine 12 zugeführt wird. Das Durchschiebefutter 44 weist ebenfalls Spannbacken auf.

Das System 10 umfasst weiterhin eine Entladeeinrichtung 46, um ein mittels der Laserbearbeitungsmaschine 12 bearbeitetes Werkstückteil abzuführen.

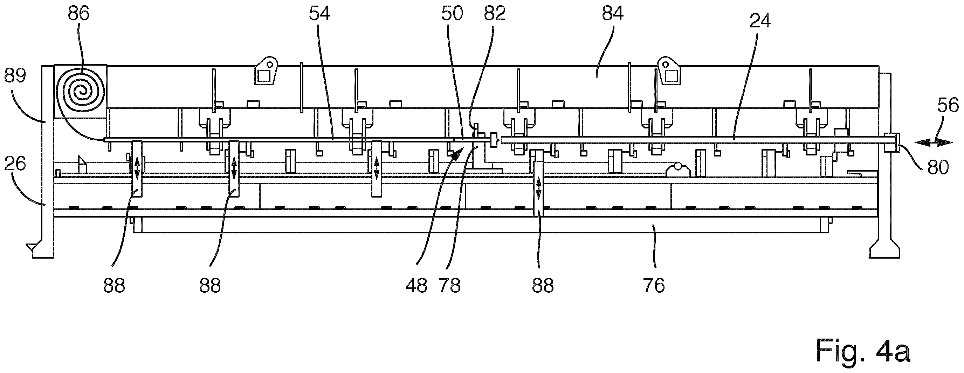

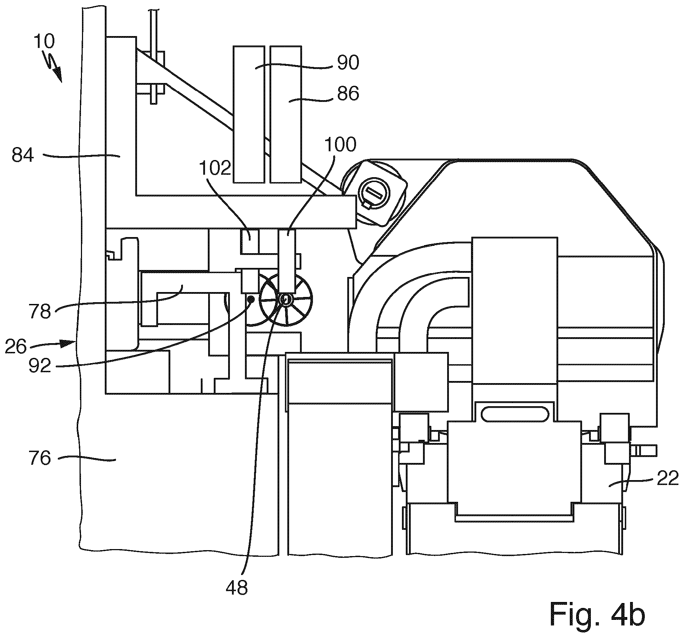

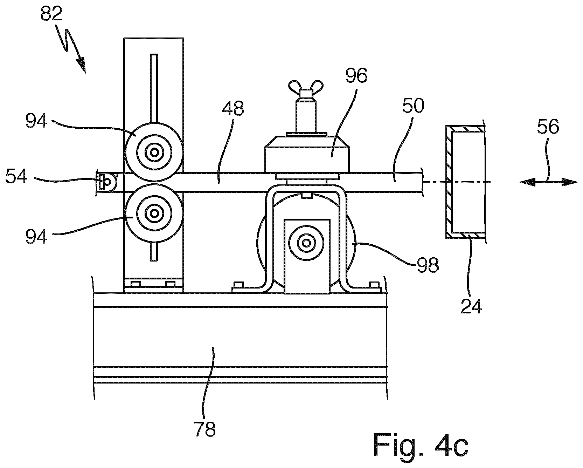

Ferner umfasst das System 10 eine Beladestation 26 zur Lagerung von hohlförmigen Werkstücken 24 sowie deren Vereinzelung und Hinführung an die Zuführeinrichtung 22. Ausführungsformen der Beladestation 26 werden später anhand der Figuren 4 bis 6 noch detailliert beschrieben werden.

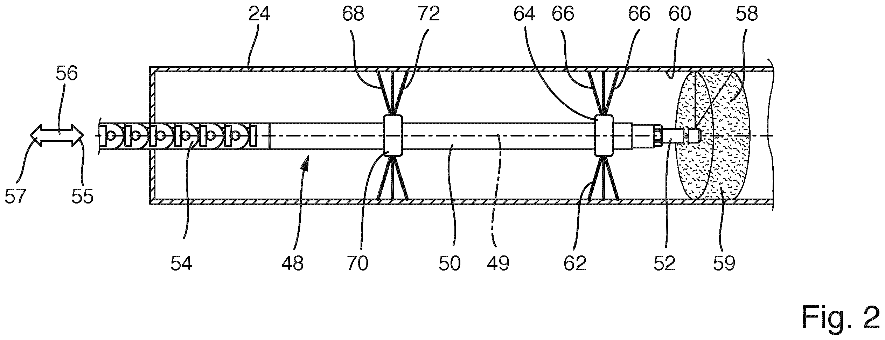

Figur 2 zeigt mit dem Bezugszeichen 48 einen Teil einer Vorrichtung zum Einbringen von Trennmittel in ein hohlförmiges Werkstück 24. Die Vorrichtung 48 umfasst einen Einführabschnitt 49 umfassend einen Führungsstab 50. Am freien Ende des Führungsstabs 50 weist dieser eine Düse 52 in Form einer Ringstrahldüse auf. Am gegenüberliegenden Ende des Führungsstabs 50 schließt eine Energieführungskette 54 an den Führungsstab 50 an. Durch die Energieführungskette 54 hindurch kann Druckluft und Trennmittel 58 in separaten Leitungen zur Düse 52 hingeführt werden. Denkbar ist auch das Vorsehen einer dritten Leitung mit Steuerluft zur Steuerung der Düse 52. Der Führungsstab 50 ist axial, wie durch den Doppelpfeil 56 angedeutet, im Werkstück 24 in eine Einführrichtung 55 und eine dazu entgegengesetzte Richtung 57 verlagerbar, um, wie schematisch durch den mit dem Bezugszeichen 59 versehenen Bereich angedeutet, Trennmittel 58 an der Innenseite 60 des Werkstücks 24 auszubringen. Um Trennmittel 58 auszubringen, wird der Führungsstab 50 zunächst in das Werkstück 24 eingeführt.

Denkbar wäre, dass die Vorrichtung 48 dann, wenn ein Werkstück 24 in der Zuführeinrichtung 22 angeordnet ist, von einem der beiden Werkstückenden aus in das Werkstück 24 eingeführt wird. Denkbar wäre allerdings insbesondere, dass die Vorrichtung 48 im Bereich der Beladestation 26 in ein Werkstück 24 eingeführt wird. Denkbar wäre, dass die Vorrichtung 48 auf einem Wagen montiert ist und an ein Werkstück 24 beispielsweise in einer Bündelmulde der Beladestation 26 heranführbar ist, um das Werkstück 24 mit Trennmittel 58 zu benetzen. Ein Werkstück 24 könnte dabei auch außerhalb der Beladestation 26 auf einem Lager oder auf einem Vorbereitungsplatz mit Trennmittel 58 benetzt werden. Denkbar wäre allerdings insbesondere, dass die Vorrichtung 48 an der Beladestation 26 angeordnet ist und damit auch ein Teil der Beladestation 26 ist, wie anhand der Figuren 4 bis 6 später noch gezeigt werden wird.

Am Führungsstab 50 ist in Einführrichtung 55 vor der Düse 52 ein Zentrierelement 62 angeordnet. Das Zentrierelement 62 umfasst einen Bürstenkörper 64 an dem eine Anzahl Zentrierbürstenfasern 66 angeordnet sind.

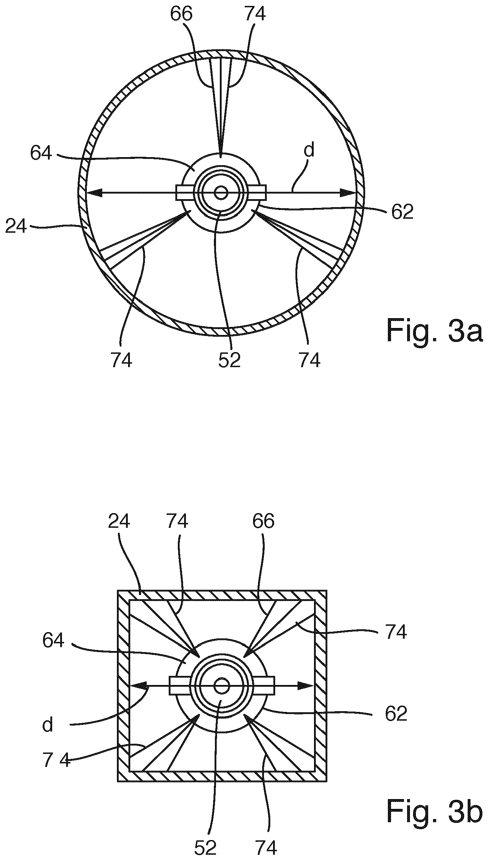

Beabstandet zum Zentrierelement 62 und in Einführrichtung 55 vor diesem ist ein Stabilisationselement 68 angeordnet, welches denselben strukturellen Aufbau wie das Zentrierelement 62 aufweist und folglich einen Stabilisationskörper 70 und daran angeordnete Stabilisationsbürstenfasern 72 umfasst. Das Zentrierelement 62 dient dabei zur Zentrierung des Führungsstabs 50, insbesondere der Düse 52 des Führungsstabs 50, im Werkstück 24, sodass die Düse 52 im Wesentlichen in der Mitte eines hohlförmigen Werkstücks 24 zentriert gehalten wird (vgl. Figuren 3a) bis 3c)). Beim Einführen in das Werkstück können sich die Zentrierbürstenfasern 66 elastisch verformen, sodass eine Zentrierung stattfinden kann. Aufgrund der elastischen Verformung kann eine Zentrierung bei unterschiedlichsten Werkstückdurchmessern bereitgestellt werden. Das Stabilisationselement 70 sorgt dafür, dass der Führungsstab 50 nicht im Werkstück 24 verkippt, sodass eine besonders vorteilhafte stabilisierte Zentrierung der Düse 52 im Werkstück 24 bereitgestellt werden kann. Auch hierbei können sich die Stabilisationsbürstenfasern 72 beim Einführen in das Werkstück 24 elastisch verformen.

Figur 3a) zeigt eine Ausführungsform des Zentrierelements 62. Dabei sind am Zentrierkörper 64 drei in einem Abstand von 120° zueinander angeordnete Zentrierbürstenfaserbündel 74 vorgesehen, um die Düse 52 in einem Werkstück 24 zentriert zu halten. Das Werkstück 24 ist kreiszylindrisch ausgebildet. Die Zentrierbürstenfasern 66 können sich beim Einführen in das Werkstück 24 elastisch verformen und so bei unterschiedlichsten Werkstückdurchmessern (in diesem Fall Rohrdurchmessern) d eine Zentrierung der Düse 52 im Werkstück 24 bereitstellen.

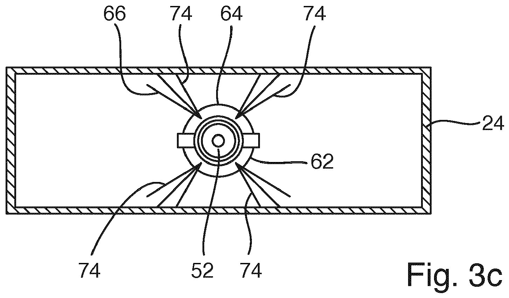

Figur 3b) zeigt vier Bürstenfaserbündel 74, die im Abstand von 90° zueinander angeordnet sind, wobei das Werkstück 24 in diesem Fall eine quadratische Kontur aufweist. Auch hierbei kann eine Zentrierung aufgrund der elastischen Verformbarkeit der Zentrierbürstenfasern 66 bei unterschiedlichsten Durchmessern d des Werkstücks 24 bereitgestellt werden. Schließlich zeigt Figur 3c) das Zentrierelement 52 gemäß Figur 3b) eingeführt in ein rechteckiges Werkstück 24, wobei auch hier eine mittige zentrierte Stabilisierung bereitgestellt werden kann.

Eine konkrete Implementierung der Vorrichtung 48 wird nun anhand dreier Ausführungsformen gemäß den Figuren 4 bis 6 gezeigt:
Figur 4a) und 4b) zeigen die Beladestation 26 des Systems 10. Dabei umfasst die Beladestation 26 eine Vereinzelungseinrichtung 76 zum Vereinzeln eines Werkstücks 24 aus einer nicht gezeigten Bündelmulde. Da die Werkstücke 24 unterschiedliche Rohrlängen haben, kann das Werkstück 24 in axialer Richtung 56 verlagert werden. Diese erfolgt mittels eines Messschiebers 78, der folglich zum Verschieben eines Werkstücks 24 ausgebildet ist. Der Messschieber 78 verschiebt dabei das Werkstück 24, bis dieses an einem Anschlag 80 zur Anlage kommt. Sodann kann die Länge des Werkstücks 24 bestimmt werden. Auf dem Messschieber 78 ist eine Einführeinrichtung 82 angeordnet, die anhand von Figur 4c) später noch näher erläutert werden wird. Die Beladestation 26 umfasst ferner eine Greifeinrichtung 84, um ein vereinzeltes Werkstück 24 der Zuführeinrichtung 22 des Systems 10 zuzuführen (vgl. Figur 1). Die Beladestation 26 umfasst die Vorrichtung 48. Dabei ist in einem in Figur 4a) gezeigten linken oberen Endbereich der Beladestation 26 eine Kettentrommel 86 zum Aufrollen der Energieführungskette 54 am Maschinengestell 89 der Beladestation 26 angeordnet. Ferner sind eine Anzahl Stützelemente 88 vorgesehen, um je nach Länge des Werkstücks 24 die Energieführungskette 54 zu stützen. Wie in Figur 4b) zu erkennen ist, ist neben der Kettentrommel 86 noch eine Schlauchtrommel 90 angeordnet. Auf diese ist ein Einführschlauch 92 aufwickelbar.

Wie in Figur 4c) zu erkennen ist, umfasst die Einführeinrichtung 82 zunächst zwei Führungsrollen 94, um den Führungsstab 50 dem Werkstück 24 zuzuführen. Ferner ist eine Spannrolle 96 vorgesehen, um den Führungsstab 50 gegen die Antriebsrolle 98 zu drücken. Die Antriebsrolle 98 wird von einem in Figur 4b) gezeigten Motor 100 angetrieben, um den Führungsstab 50 in das Werkstück 24 einzuführen. Ferner ist am Messschieber 78 auch ein in Figur 4b) erkennbarer Motor 102 zu erkennen, um den Einführschlauch 92 alternativ dazu in das Werkstück 24 einzuführen.

Insgesamt ist die Funktionsweise des Systems 10 sodann wie folgt:
Bevor ein Werkstück 24 der Laserschneidmaschine 12 zugeführt wird, wird die Innenseite 60 des Werkstücks 24 in der Beladestation 26 mit Trennmittel 58 beaufschlagt, um das Anhaften von im Prozess anfallenden Schneidspritzern an der Innenseite 60 des Werkstücks 24 zu reduzieren. Hierzu wird der Führungsstab 50 mit der Düse 52 über die Einführeinrichtung 82 in das Werkstück 24 eingeführt (vgl. Figur 2). Dabei können sich die Zentrierbürstenfasern 66 sowie die Stabilisationsbürstenfasern 72 elastisch verformen, um den Führungsstab 50 im Werkstück 24 zentriert zu halten. Sodann kann das Trennmittel 58 entlang der Innenseite 60 des Werkstücks 24 ausgebracht werden. Dabei kann die Düse 52 beispielsweise von einem Werkstückende in Ausfuhrrichtung 57 bis zum anderen Werkstückende verlagert werden, um so nach und nach die gesamte Werkstückinnenseite 60 mit Trennmittel zu benetzen.

Zum Einbringen des Führungsstabs 50 wird dabei der Messschieber 78 verlagert, bis das Werkstück 24 am Anschlag 80 angelangt. Dabei wird die Energieführungskette 54 von der Kettentrommel 86 abgerollt. Über die Einführeinheit 82 kann sodann, sobald der Messschieber 78 das Werkstück 24 an den Anschlag 80 verbracht hat, der Führungsstab 50 in das Werkstück 24 eingeführt werden.

Nach dem Benetzen der Innenseite 60 des Werkstücks 24 mit Trennmittel 58 kann das Werkstück über die Greifeinrichtung 84 der Laserbearbeitungsmaschine 12 zum Laserbearbeiten, insbesondere zum Laserschneiden, zugeführt werden.

Bei kleinen Rohrdurchmessern, beispielsweise zwischen 20 mm und 70 mm, kann statt des Führungsstabs 50 auch der Einführschlauch 92 in das Werkstück 24 eingeführt werden. Folglich kann je nach Rohrdurchmesser entweder der Führungsstab 50 eingeführt werden, wobei das Zentrierelement 62 sowie das Stabilisationselement 68 den Führungsstab 50 im Werkstück 24 zentriert halten. Bei kleineren Rohrdurchmessern kann demgegenüber auch der Einführschlauch 92 eingeführt werden, ohne dass weitere Zentrier- bzw. Stabilisationselemente von Nöten wären, wobei dennoch eine hinreichende Benetzungsgüte mit Trennmittel 58 erreicht werden kann.

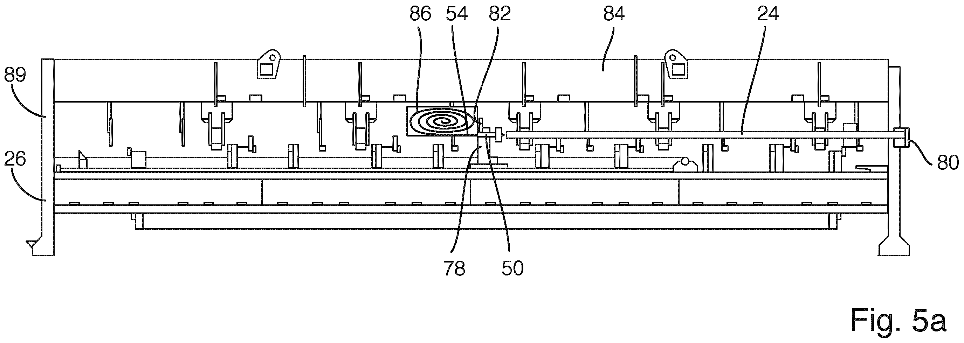

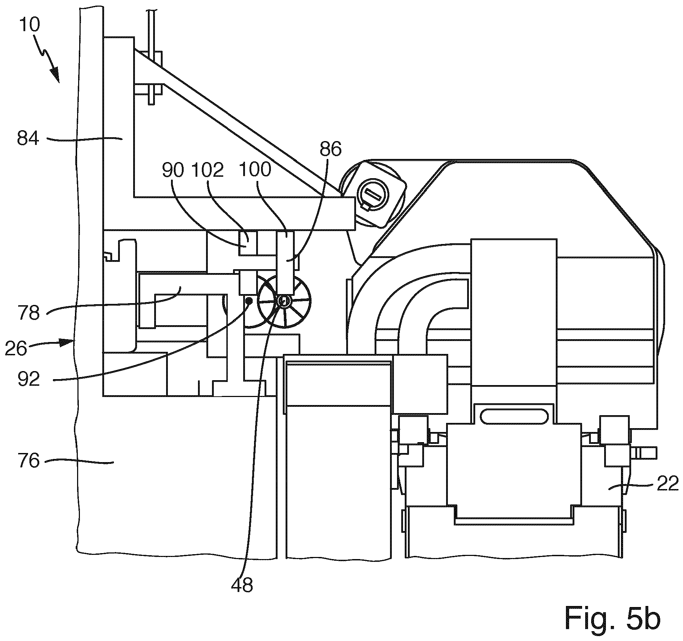

Die Ausführungsform gemäß den Figuren 5a) und 5b) zeigt eine alternative Ausführungsform. Dabei ist die Kettentrommel 86 am Messschieber 78 befestigt und wird zusammen mit diesem verlagert. In diesem Fall können insbesondere die Stützeinrichtungen 88 zur Stützung der Energieführungskette 54 entfallen.

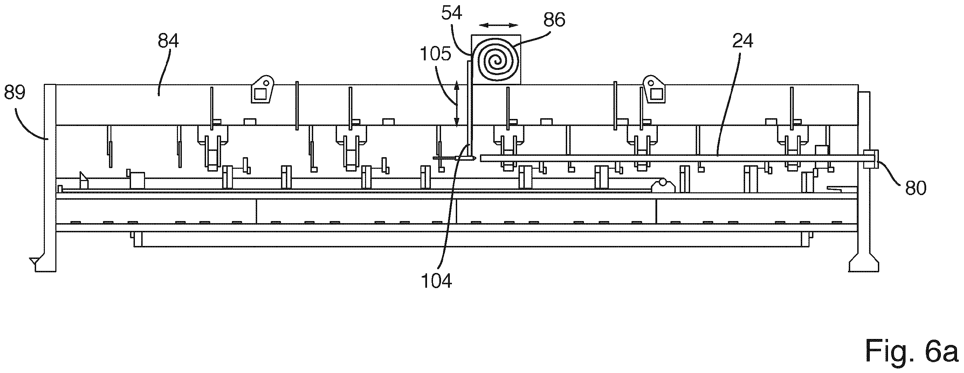

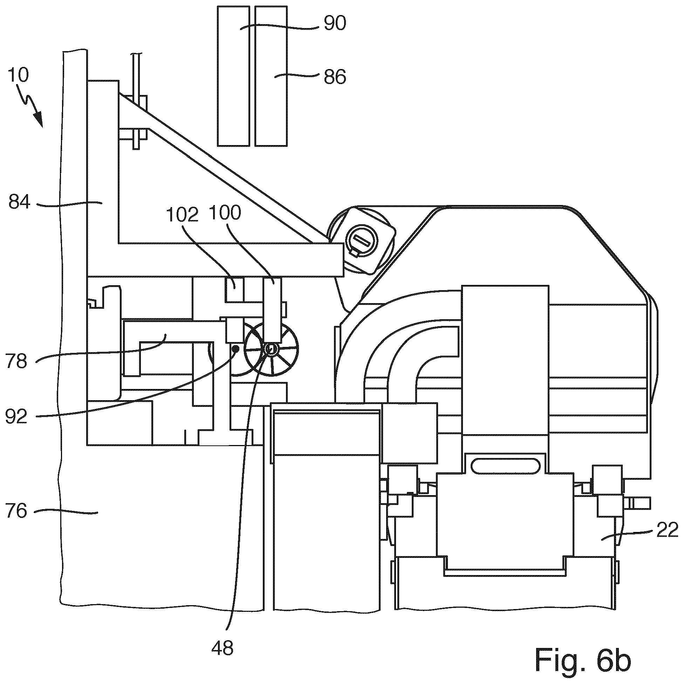

Figur 6 zeigt eine weitere alternative Ausführungsform. Dabei ist die Kettentrommel 86 axial am Maschinengestell 89 der Beladestation 26 verlagerbar. Ein sich vertikal erstreckender Ausleger 104 ist mit der Kettentrommel 86 bewegungsgekoppelt. Dabei ist der Ausleger in vertikaler Richtung 105 verlagerbar. Am unteren Ende des vertikalen Auslegers 104 ist der Motor 100 zusammen mit der nicht näher gezeigten Einführungsrichtung 82 vorgesehen, um den Führungsstab 50 in ein Werkstück 24 einzuführen. Auch die Schlauchtrommel 90 kann in ähnlicher Weise axial verlagerbar angeordnet sein. Schließlich kann auch der Motor 102 zur Schlaucheinführung in ähnlicher Weise am Ausleger 104 angeordnet sein.

## Patentansprüche

1. Beladestation (26) zur Lagerung hohlförmiger Werkstücke (24) und zum Beladen einer Laserbeitungsmaschine (12) mit den Werkstücken (24), die Beladestation (26) umfassend
ein Maschinengestell (89),
einen axial verlagerbaren Messschieber (78), und
eine Vorrichtung (48) zum Einbringen eines Trennmittels (58) in die hohlförmigen Werkstücke (24) bevor diese mittels der Laserbearbeitungsmaschine (12) bearbeitet werden, die Vorrichtung (48) umfassend
einen Einführabschnitt (49) mit einer Düse (52) zum Ausbringen des Trennmittels (58) und mit einem am Einführabschnitt (49) angeordneten Zentrierelement (62) zum Zentrieren des Einführabschnitts (49) innerhalb des hohlförmigen Werkstücks (24), wobei der Einführabschnitt (49) einen Führungsstab (50) umfasst, an dessen freiem Ende die Düse (52) angeordnet ist, wobei das Zentrierelement (62) am Führungsstab (50) angeordnet ist, und wobei an das der Düse (52) abgewandte Ende des Führungsstabs (50) eine Energieführungskette (54) anschließt,
eine Kettentrommel (86) zum Aufrollen der Energieführungskette (54), und
eine Einführeinrichtung (82) mit einem Antriebsmittel (98) zum Einführen des Einführabschnitts (49) in das Werkstück (24),
wobei die Kettentrommel (86) an dem Maschinengestell (89) ortsfest angeordnet ist, und
wobei die Einführeinrichtung (82) am Messschieber (78) angeordnet ist.

2. Beladestation (26) zur Lagerung hohlförmiger Werkstücke (24) und zum Beladen einer Laserbeitungsmaschine (12) mit den Werkstücken (24), die Beladestation (26) umfassend
einen axial verlagerbaren Messschieber (78), und
eine Vorrichtung (48) zum Einbringen eines Trennmittels (58) in die hohlförmigen Werkstücke (24) bevor diese mittels der Laserbearbeitungsmaschine (12) bearbeitet werden, die Vorrichtung (48) umfassend
einen Einführabschnitt (49) mit einer Düse (52) zum Ausbringen des Trennmittels (58) und mit einem am Einführabschnitt (49) angeordneten Zentrierelement (62) zum Zentrieren des Einführabschnitts (49) innerhalb des hohlförmigen Werkstücks (24), wobei der Einführabschnitt (49) einen Führungsstab (50) umfasst, an dessen freiem Ende die Düse (52) angeordnet ist, wobei das Zentrierelement (62) am Führungsstab (50) angeordnet ist, und wobei an das der Düse (52) abgewandte Ende des Führungsstabs (50) eine Energieführungskette (54) anschließt,
eine Kettentrommel (86) zum Aufrollen der Energieführungskette (54), und
eine Einführeinrichtung (82) mit einem Antriebsmittel (98) zum Einführen des Einführabschnitts (49) in das Werkstück (24),
wobei die Kettentrommel (86) und die Einführeinrichtung (82) am Messschieber (78) angeordnet sind.

3. Beladestation (26) zur Lagerung hohlförmiger Werkstücke (24) und zum Beladen einer Laserbeitungsmaschine (12) mit den Werkstücken (24), die Beladestation (26) umfassend
ein Maschinengestell (89), und
eine Vorrichtung (48) zum Einbringen eines Trennmittels (58) in die hohlförmigen Werkstücke (24) bevor diese mittels der Laserbearbeitungsmaschine (12) bearbeitet werden, die Vorrichtung (48) umfassend
einen Einführabschnitt (49) mit einer Düse (52) zum Ausbringen des Trennmittels (58) und mit einem am Einführabschnitt (49) angeordneten Zentrierelement (62) zum Zentrieren des Einführabschnitts (49) innerhalb des hohlförmigen Werkstücks (24), wobei der Einführabschnitt (49) einen Führungsstab (50) umfasst, an dessen freiem Ende die Düse (52) angeordnet ist, wobei das Zentrierelement (62) am Führungsstab (50) angeordnet ist, und wobei an das der Düse (52) abgewandte Ende des Führungsstabs (50) eine Energieführungskette (54) anschließt,
eine Kettentrommel (86) zum Aufrollen der Energieführungskette (54), und
eine Einführeinrichtung (82) mit einem Antriebsmittel (98) zum Einführen des Einführabschnitts (49) in das Werkstück (24),
wobei die Kettentrommel (86) am Maschinengestell (89) axial verlagerbar angeordnet ist, und
wobei die Einführeinrichtung (82) an einem mit der Kettentrommel (86) bewegungsgekoppelten Ausleger (104) angeordnet ist.

4. Beladestation (26) nach einem der vorhergehenden Ansprüche, wobei das Zentrierelement (62) eine Anzahl Zentrierbürstenfasern (66) umfasst.

5. Beladestation (26) nach einem der vorhergehenden Ansprüche, wobei am Führungsstab (50) zusätzlich zum Zentrierelement (62) ein Stabilisationselement (68) vorgesehen ist, um ein Verkippen des Führungsstabes (50) im Werkstück (24) zu verhindern.

6. Beladestation (26) nach einem der vorhergehenden Ansprüche, wobei die Vorrichtung (48) zusätzlich einen Einführschlauch (92) mit einer Düse zum Ausbringen des Trennmittels (58) umfasst, wobei der Einführschlauch (92) statt des Einführabschnitts (49) in ein hohlförmiges Werkstück (24) einführbar ist.

7. System (10) zum Bearbeiten hohlförmiger Werkstücke (24), das System (10) umfassend eine Beladestation (26) nach einem der vorhergehenden Ansprüche und eine Laserbearbeitungsmaschine (12) zum Laserbearbeiten der Werkstücke (24).

8. Verfahren zum Einbringen eines Trennmittels (58) in ein hohlförmiges Werkstück (24) bevor das Werkstück (24) mittels einer Laserbearbeitungsmaschine (12) bearbeitet wird, mittels einer Beladestation (26) nach einem der Ansprüche 1 bis 6, das Verfahren umfassend die folgenden Schritte:
a. Einführen des Einführabschnitts (49) zum Ausbringen des Trennmittels (58) in ein hohlförmiges Werkstück (24), wobei das Zentrierelement (62) den Einführabschnitt (50) innerhalb des Werkstücks (24) zentriert; und
b. Ausbringen des Trennmittels (58) im Werkstück (24) durch die Düse (52) hindurch.

9. Verfahren nach Anspruch 8 unter Verwendung des Systems (10) nach Anspruch 7, das Verfahren umfassend den weiteren Schritt:
c. Laserbearbeiten des mit Trennmittel (58) benetzten Werkstücks (24) mittels der Laserbearbeitungsmaschine (12) .

## Claims

1. A loading station (26) for storing hollow workpieces (24) and for loading a laser processing machine (12) with the workpieces (24), the loading station (26) comprising
a machine frame (89),
an axially displaceable caliper (78), and
a device (48) for introducing a release agent (58) into the hollow workpieces (24) before they are processed by means of the laser processing machine (12), the device (48) comprising
an insertion section (49) with a nozzle (52) for discharging the release agent (58) and with a centering element (62) arranged on the insertion section (49) for centering the insertion section (49) within the hollow workpiece (24), wherein the insertion section (49) comprises a guide rod (50), at the free end of which the nozzle (52) is arranged, wherein the centering element (62) is arranged on the guide rod (50), and wherein an energy chain (54) is connected to the end of the guide rod (50) facing away from the nozzle (52),
a chain drum (86) for winding up the energy chain (54), and
an insertion device (82) with a drive means (98) for inserting the insertion section (49) into the workpiece (24),
wherein the chain drum (86) is fixed in place on the machine frame (89), and
wherein the insertion device (82) is arranged on the caliper (78).

2. A loading station (26) for storing hollow workpieces (24) and for loading a laser processing machine (12) with the workpieces (24), the loading station (26) comprising
an axially displaceable caliper (78), and
a device (48) for introducing a release agent (58) into the hollow workpieces (24) before they are processed by means of the laser processing machine (12), the device (48) comprising
an insertion section (49) with a nozzle (52) for discharging the release agent (58) and with a centering element (62) arranged on the insertion section (49) for centering the insertion section (49) within the hollow workpiece (24), wherein the insertion section (49) comprises a guide rod (50), at the free end of which the nozzle (52) is arranged, wherein the centering element (62) is arranged on the guide rod (50), and wherein an energy chain (54) is connected to the end of the guide rod (50) facing away from the nozzle (52),
a chain drum (86) for winding up the energy chain (54), and
an insertion device (82) with a drive means (98) for inserting the insertion section (49) into the workpiece (24),
wherein the chain drum (86) and the insertion device (82) are arranged on the caliper (78).

3. A loading station (26) for storing hollow workpieces (24) and for loading a laser processing machine (12) with the workpieces (24), the loading station (26) comprising
a machine frame (89), and
a device (48) for introducing a release agent (58) into the hollow workpieces (24) before they are processed by means of the laser processing machine (12), the device (48) comprising
an insertion section (49) with a nozzle (52) for discharging the release agent (58) and with a centering element (62) arranged on the insertion section (49) for centering the insertion section (49) within the hollow workpiece (24), wherein the insertion section (49) comprises a guide rod (50), at the free end of which the nozzle (52) is arranged, wherein the centering element (62) is arranged on the guide rod (50), and wherein an energy chain (54) is connected to the end of the guide rod (50) facing away from the nozzle (52),
a chain drum (86) for winding up the energy chain (54), and
an insertion device (82) with a drive means (98) for inserting the insertion section (49) into the workpiece (24),
wherein the chain drum (86) is arranged axially displaceable on the machine frame (89), and
wherein the insertion device (82) is arranged on a boom (104) coupled to the chain drum (86) for movement.

4. The loading station (26) according to one of the preceding claims, wherein the centering element (62) comprises a number of centering brush fibers (66).

5. The loading station (26) according to one of the preceding claims, wherein a stabilizing element (68) is provided on the guide rod (50) in addition to the centering element (62) in order to prevent the guide rod (50) from tilting in the workpiece (24).

6. The loading station (26) according to one of the preceding claims, wherein the device (48) additionally comprises an insertion tube (92) with a nozzle for discharging the release agent (58), wherein the insertion tube (92) can be inserted into a hollow workpiece (24) instead of the insertion section (49).

7. A system (10) for processing hollow workpieces (24), the system (10) comprising a loading station (26) according to one of the preceding claims and a laser processing machine (12) for laser processing the workpieces (24).

8. A method for introducing a release agent (58) into a hollow workpiece (24) before the workpiece (24) is processed by means of a laser processing machine (12), by means of a loading station (26) according to any one of claims 1 to 6, the method comprising the following steps:
a. Insertion of the insertion section (49) for discharging the release agent (58) into a hollow workpiece (24), wherein the centering element (62) centers the insertion section (50) within the workpiece (24); and
b. Discharge of the release agent (58) into the workpiece (24) through the nozzle (52).

9. The method according to claim 8 using the system (10) according to claim 7, the method comprising the further step of:
c. Laser processing of the workpiece (24) wetted with release agent (58) by means of the laser processing machine (12).

## Revendications

1. Station de chargement (26) pour le stockage de pièces à usiner (24) creuses et pour le chargement d'une machine d'usinage au laser (12) avec les pièces à usiner (24), la station de chargement (26) comprenant
un bâti de machine (89),
un pied à coulisse (78) déplaçable axialement, et
un dispositif (48) permettant d'introduire un agent de séparation (58) dans les pièces à usiner (24) creuses avant que celles-ci soient usinées au moyen de la machine d'usinage au laser (12), le dispositif (48) comprenant
une section d'insertion (49) munie d'une buse (52) destinée à la distribution de l'agent de séparation (58) et d'un élément de centrage (62) disposé sur la section d'insertion (49) destiné au centrage de la section d'insertion (49) à l'intérieur de la pièce à usiner (24) creuse, la section d'insertion (49) comprenant une barre de guidage (50) à l'extrémité libre de laquelle est disposée la buse (52), l'élément de centrage (62) étant disposé sur la barre de guidage (50), et une chaîne porte-câbles (54) se raccordant à l'extrémité de la barre de guidage (50) opposée à la buse (52),
un tambour à chaîne (86) destiné à enrouler la chaîne porte-câbles (54), et
un dispositif d'insertion (82) muni d'un moyen d'entraînement (98) permettant d'insérer la section d'insertion (49) dans la pièce à usiner (24),
le tambour à chaîne (86) étant disposé de manière fixe sur le bâti de machine (89), et
le dispositif d'insertion (82) étant disposé sur le pied à coulisse (78).

2. Station de chargement (26) pour le stockage de pièces à usiner (24) creuses et pour le chargement d'une machine d'usinage au laser (12) avec les pièces à usiner (24), la station de chargement (26) comprenant
un pied à coulisse (78) déplaçable axialement, et
un dispositif (48) permettant d'introduire un agent de séparation (58) dans les pièces à usiner (24) creuses avant que celles-ci soient usinées au moyen de la machine d'usinage au laser (12), le dispositif (48) comprenant
une section d'insertion (49) munie d'une buse (52) destinée à la distribution de l'agent de séparation (58) et d'un élément de centrage (62) disposé sur la section d'insertion (49) destiné au centrage de la section d'insertion (49) à l'intérieur de la pièce à usiner (24) creuse, la section d'insertion (49) comprenant une barre de guidage (50) à l'extrémité libre de laquelle est disposée la buse (52), l'élément de centrage (62) étant disposé sur la barre de guidage (50), et une chaîne porte-câbles (54) se raccordant à l'extrémité de la barre de guidage (50) opposée à la buse (52),
un tambour à chaîne (86) destiné à enrouler la chaîne porte-câbles (54), et
un dispositif d'insertion (82) muni d'un moyen d'entraînement (98) permettant d'insérer la section d'insertion (49) dans la pièce à usiner (24), le tambour à chaîne (86) et le dispositif d'insertion (82) étant disposés sur le pied à coulisse (78).

3. Station de chargement (26) pour le stockage de pièces à usiner (24) creuses et pour le chargement d'une machine d'usinage au laser (12) avec les pièces à usiner (24), la station de chargement (26) comprenant
un bâti de machine (89), et
un dispositif (48) permettant d'introduire un agent de séparation (58) dans les pièces à usiner (24) creuses avant que celles-ci soient usinées au moyen de la machine d'usinage au laser (12), le dispositif (48) comprenant
une section d'insertion (49) munie d'une buse (52) destinée à la distribution de l'agent de séparation (58) et d'un élément de centrage (62) disposé sur la section d'insertion (49) destiné au centrage de la section d'insertion (49) à l'intérieur de la pièce à usiner (24) creuse, la section d'insertion (49) comprenant une barre de guidage (50) à l'extrémité libre de laquelle est disposée la buse (52), l'élément de centrage (62) étant disposé sur la barre de guidage (50), et une chaîne porte-câbles (54) se raccordant à l'extrémité de la barre de guidage (50) opposée à la buse (52),
un tambour à chaîne (86) destiné à enrouler la chaîne porte-câbles (54), et
un dispositif d'insertion (82) muni d'un moyen d'entraînement (98) permettant d'insérer la section d'insertion (49) dans la pièce à usiner (24),
le tambour à chaîne (86) étant disposé sur le bâti de machine (89) de manière à pouvoir être déplacé axialement, et
le dispositif d'insertion (82) étant disposé sur une flèche (104) couplée en mouvement avec le tambour à chaîne (86).

4. Station de chargement (26) selon l'une des revendications précédentes, **caractérisée en ce que** l'élément de centrage (62) comprend une pluralité de fibres de brosse de centrage (66).

5. Station de chargement (26) selon l'une des revendications précédentes, **caractérisée en ce qu'**un élément de stabilisation (68) est prévu sur la barre de guidage (50) en plus de l'élément de centrage (62), afin d'empêcher un basculement de la barre de guidage (50) dans la pièce à usiner (24).

6. Station de chargement (26) selon l'une des revendications précédentes, **caractérisée en ce que** le dispositif (48) comprend en outre un tuyau d'insertion (92) muni d'une buse destinée à la distribution de l'agent de séparation (58), le tuyau d'insertion (92) pouvant être inséré dans une pièce à usiner (24) creuse à la place de la section d'insertion (49).

7. Système (10) d'usinage de pièces à usiner (24) creuses, le système (10) comprenant une station de chargement (26) selon l'une des revendications précédentes et une machine d'usinage au laser (12) permettant l'usinage au laser des pièces à usiner (24).

8. Procédé d'introduction d'un agent de séparation (58) dans une pièce à usiner (24) creuse avant que la pièce à usiner (24) soit usinée au moyen d'une machine d'usinage au laser (12), au moyen d'une station de chargement (26) selon l'une des revendications 1 à 6, le procédé comprenant les étapes suivantes :
a. insertion de la section d'insertion (49) permettant la distribution de l'agent de séparation (58) dans une pièce à usiner (24) creuse, l'élément de centrage (62) centrant la section d'insertion (50) à l'intérieur de la pièce à usiner (24) ; et
b. distribution de l'agent de séparation (58) dans la pièce à usiner (24) à travers la buse (52).

9. Procédé selon la revendication 8, utilisant le système (10) selon la revendication 7, le procédé comprenant l'étape supplémentaire :
c. usinage au laser de la pièce à usiner (24) mouillée par l'agent de séparation (58) au moyen de la machine d'usinage au laser (12).
